# EUROPEAN PATENT APPLICATION

(11) **EP 4 761 268 A1**
(43) Date of publication of application: **17.06.2026**
(21) Application number: 25216870.3
(22) Date of filing: 19.11.2025
(51) Int. Cl.: H04N 25/131, G06V 10/143, G06V 20/58, H04N 23/11, H04N 23/20, H04N 23/56, H04N 25/13

(54) **IMAGING APPARATUS, PROCESSING METHOD OF IMAGING APPARATUS, AND RECORDING MEDIUM**

(30) Priority: 16.12.2024 JP 2024219783
(71) Applicant: Canon Kabushiki Kaisha, Tokyo, 146-8501 (JP)
(72) Inventor: IKARI, Daiki, Tokyo, 146-8501 (JP)
(74) Representative: TBK

(57) **Abstract**

An imaging apparatus (600) includes a first imaging element (100), a second imaging element(100), at least one memory storing instructions, and at least one processor executing the stored instructions causing the imaging apparatus to perform object recognition processing using a first image generated by the first imaging element (100), select a region in which color determination processing is to be performed based on an object detected by the object recognition processing, select color determination processing to be performed based on the object detected by the object recognition processing, and execute the selected color determination processing on the selected region using a second image generated by the second imaging element (100).

## Description

### TECHNICAL FIELD

The present disclosure relates to an imaging apparatus, a processing method of the imaging apparatus, and a program.

### BACKGROUND

Conventionally, an RGB camera exists that performs color determination for an object that is displayed in a captured image. Results of this color determination by the RGB camera are used, for example, in control of an operable apparatus such as automatic driving of a vehicle. Additionally, in order to improve the color determination accuracy for an object in an image that was captured in a state of poor visibility due to nighttime conditions, bad weather, and the like, an RGB-IR camera that simultaneously captures both RGB, which is visible light, and IR, which is invisible light, is also known. Japanese Patent Application Laid-Open Publication No. 2010-250710 discloses that a color image and a monochrome (IR) image are simultaneously acquired by using a color imaging element and a monochrome imaging element, a vehicle body region is calculated from a license plate position that is recognized by using an IR image, and a color of the vehicle body is determined by using the color image.

### SUMMARY

However, according to the technology described in Japanese Patent Application Laid-Open Publication No. 2010-250710, since the color determination for the object is performed using a single method of color determination regardless of the object to be determined, color determination for the object using a method corresponding to an object that is displayed in an image cannot be performed.

The object of the present disclosure is realizing color determination for an object using a method that corresponds to an object displayed in an image.

The present disclosure in its first aspect provides an imaging apparatus as specified in claim 1. Optional features are specified in claims 2 to 15.

The present disclosure in its second aspect provides a method for processing method of an imaging apparatus as specified in claim 16.

The present disclosure in its third aspect provides a recording medium as specified in claim 17.

According to the present disclosure, color determination of an object by a method corresponding to an object displayed in an image can be realized.

Features of the present disclosure will become apparent from the following description of embodiments with reference to the attached drawings. The following description of embodiments are described by way of example.

### BRIEF DESCRIPTION OF THE DRAWINGS

FIG. 1 is a diagram illustrating an example of the configuration of a photoelectric conversion element.
FIG. 2 is a diagram illustrating an example of the configuration of a sensor substrate.
FIG. 3 is a diagram illustrating an example of the configuration of a color filter in a pixel.
FIG. 4 is a diagram illustrating an example of the configuration of a circuit substrate.
FIG. 5 is a diagram illustrating an equivalent circuit of a pixel and a signal processing circuit.
FIG. 6 is a diagram illustrating a relation between operation of an APD and an output signal.
FIG. 7 is a diagram illustrating a functional arrangement of an IR emitter, a camera, and a moving object.
FIG. 8 is a diagram illustrating an object management table.
FIG. 9A to FIG. 9D are diagrams illustrating specific examples of objects.
FIG. 10 is a flowchart illustrating a flow of result output processing.
FIG. 11 is a diagram illustrating a relation management table.
FIG. 12 is a flowchart illustrating a flow of moving object operation processing.
FIG. 13A to FIG. 13D are diagrams illustrating examples of operation of a moving object.
FIG. 14A to FIG. 14D are diagrams illustrating examples of operation of a moving object.

### DESCRIPTION OF THE EMBODIMENTS

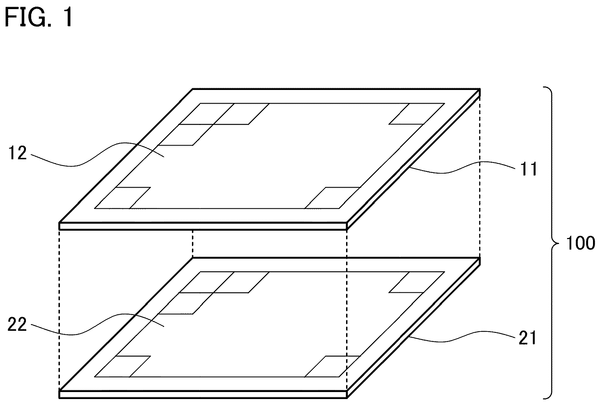

In the present embodiment, an imaging apparatus captures an image of an object such as an article, and determines a color of the object that is displayed in the captured image. More specifically, the imaging apparatus of the present embodiment detects an object that is displayed in the image, and performs color determination using a method that corresponds to the detected object. Additionally, in the present embodiment, a moving object on which the imaging apparatus is mounted operates according to a result of the color determination. Examples of the moving object include moving objects such as an automobile, an aircraft, a train, a ship, a drone, an AGV, and a robot. Hereinafter, embodiments of the present disclosure will be explained with reference to the drawings. FIG. 1 is a diagram illustrating an example of the configuration of a photoelectric conversion element 100 in a camera. The photoelectric conversion element 100 has a sensor substrate 11 and a circuit substrate 21 that are laminated. The sensor substrate 11 and the circuit substrate 21 are electrically connected to each other.

The sensor substrate 11 has a pixel region 12. The circuit substrate 21 has a circuit region 22 for processing signals detected in the pixel region 12. Note that although in the example illustrated in FIG. 1, a case in which the photoelectric conversion element 100 is a photoelectric conversion device referred to as having a laminated structure has been explained, the present disclosure is not limited thereto. The photoelectric conversion element 100 may also be referred to as a non-laminated structure, in which a structural portion of the sensor substrate 11 and a structural portion of the circuit substrate 21 are included in a shared semiconductor layer.

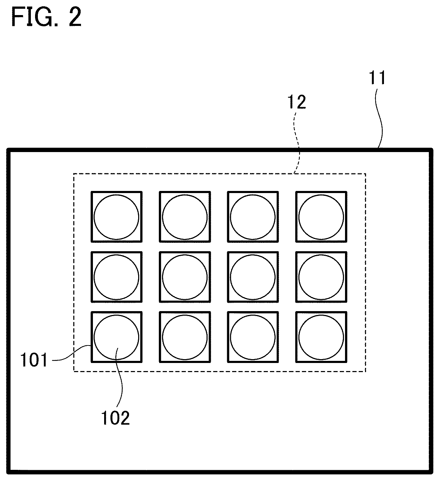

FIG. 2 is a diagram illustrating an example of the configuration of the sensor substrate 11. The pixel region 12 of the sensor substrate 11 has pixels 101. A plurality of the pixels 101 are two-dimensionally arranged in the pixel region 12. The pixel 101 includes a photoelectric conversion unit 102 including an avalanche photodiode (hereinafter, APD). The photoelectric conversion unit 102 functions as a sensor unit that generates pulses at a frequency corresponding to a frequency at which photons are received. Note that the number of rows and the number of fields in which the pixels 101 are arranged in the pixel region 12 may be any number.

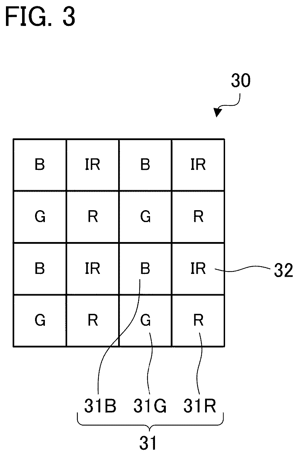

FIG. 3 is a diagram illustrating an example of the configuration of a color filter 30 in the pixels 101. The color filter 30 includes an RGB filter 31 that transmits visible light, and an IR filter 32 that transmits invisible light. The RGB filter 31 includes an R filter 31R that transmits light of a red wavelength, a B filter 31B that transmits light of a blue wavelength, and a G filter 31G that transmits light of a green wavelength. The IR filter 32 is a filter for an infrared region that transmits light of an infrared (IR) wavelength.

In the pixel region 12, the color filter 30 that is included in each pixel 101 is composed of one from among the R filter 31R, the B filter 31B, the G filter 31G, and the IR filter 32. In the present embodiment, as illustrated in FIG. 3, in the pixel region 12, there is an alternating arrangement of fields in which the B filter 31B and the G filter 31G are alternately arranged, and fields in which the IR filter 32 and the R filter 31R are alternately arranged. However, the arrangement of the RGB filter 31 and the IR filter 32 in the pixel region 12 may be different from the illustrated example. Thus, the photoelectric conversion unit 102 of the present embodiment receives non-visible light and also receives visible light. Therefore, the photoelectric conversion element 100 may also be considered to serve as a first imaging element having the photoelectric conversion unit 102 that is capable of receiving invisible light. Additionally, the photoelectric conversion element 100 may also be considered to serve as a second imaging element having the photoelectric conversion unit 102 that is capable of receiving visible light.

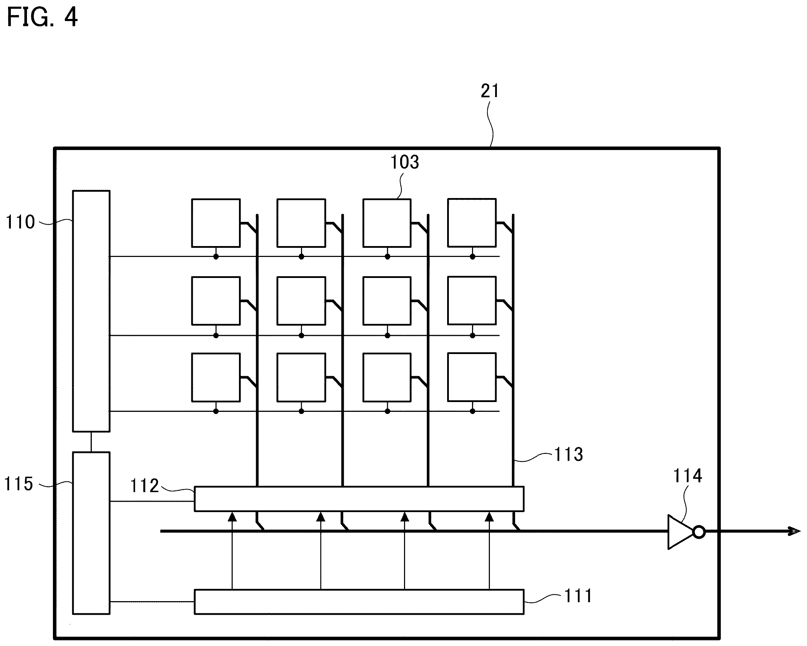

FIG. 4 is a diagram illustrating an example of the configuration of the circuit substrate 21. The circuit substrate 21 has a signal processing circuit 103, which processes charges that have been photoelectrically converted in the photoelectric conversion unit 102, a readout circuit 112, a control pulse generating unit 115, a horizontal scanning circuit 111, a vertical signal line 113, a vertical scanning circuit 110, and an output circuit 114. The vertical scanning circuit 110 receives a control pulse that is supplied from the control pulse generating unit 115, and sequentially supplies control pulses to a plurality of pixels 101 that are arranged in a left-right direction of FIG. 2. Logic circuits such as a shift register and an address decoder are employed in the vertical scanning circuit 110. The signal processing circuit 103 is provided for each photoelectric conversion unit 102, and processes a signal that is output from the photoelectric conversion unit 102. The signal processing circuit 103 is provided with a counter, a memory, and the like, and a digital value is held in the memory. The horizontal scanning circuit 111 inputs a control pulse to the signal processing circuit 103 to read out a signal from the memory of the pixel 101 in which a digital signal is held. The vertical signal line 113 is a signal line through which a signal that is output from the pixel 101 that was selected by the vertical scanning circuit 110 passes. The signal that passes through the vertical signal line 113 is output to the exterior of the photoelectric conversion element 100 via the readout circuit 112 and the output circuit 114. The readout circuit 112 incorporates a plurality of buffers that are connected to the vertical signal line 113.

As illustrated in FIG. 2 and FIG. 4, a plurality of signal processing circuits 103 are provided in a region that overlaps with the pixel region 12 in a front-back direction of the sheet surface. Additionally, the vertical scanning circuit 110, the horizontal scanning circuit 111, the readout circuit 112, the output circuit 114, and the control pulse generating unit 115 are provided so as to overlap with the sensor substrate 11 in the front-back direction of the sheet surface, while not overlapping with the pixel region 12. That is, the sensor substrate 11 has the pixel region 12 and a non-pixel region that is different from the pixel region 12. The vertical scanning circuit 110, the horizontal scanning circuit 111, the readout circuit 112, the output circuit 114, and the control pulse generating unit 115 are provided so as to overlap with the non-pixel region of the sensor substrate 11 in the front-back direction of the sheet surface.

It should be noted that the arrangement of the vertical signal line 113, the readout circuit 112, and the output circuit 114 is not limited to the example illustrated in FIG. 4. For example, the vertical signal line 113 may be provided so as to extend in a left-right direction of the drawing, and the readout circuit 112 may be connected to a tip end of the vertical signal line 113. Additionally, the signal processing circuit 103 does not need to be provided for each photoelectric conversion unit 102. A single signal processing circuit 103 may sequentially perform signal processing on a plurality of photoelectric conversion units 102. In the circuit substrate 21 of the present embodiment, a signal processing circuit 103 is provided for each of the R filter 31R, the G filter 31G, the B filter 31B, and the IR filter 32, and each signal processing circuit 103 processes light that has been transmitted through a corresponding color filter 30. It should be noted that light that has been transmitted through the R filter 31R may hereinafter be referred to as an R signal. Additionally, light that has been transmitted through the G filter 31G may hereinafter be referred to as a G signal. Additionally, light that has been transmitted through the B filter 31B may hereinafter be referred to as a B signal. Additionally, light that has been transmitted through the IR filter 32 may hereinafter be referred to as an IR signal. The R signal, the G signal, the B signal, and the IR signal are all signals that are obtained after photoelectric conversion. A digital value that is obtained after photoelectric conversion corresponding to a target signal from among the R signal, the G signal, the B signal, and the IR signal is held in the memory of the signal processing circuit 103.

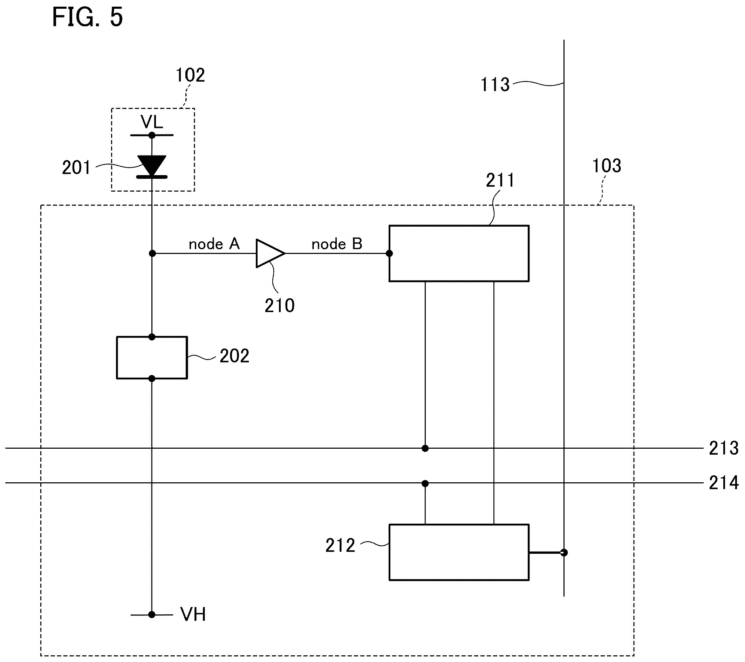

FIG. 5 is a diagram illustrating an equivalent circuit of the pixel 101 and the signal processing circuit 103. An APD 201 that is included in the photoelectric conversion unit 102 generates a charge pair corresponding to incident light through photoelectric conversion. One of two nodes of the APD 201 is connected to a power supply line to which a driving voltage VL (first voltage) is supplied. The other of the two nodes of the APD 201 is connected to a power supply line to which a driving voltage VH (second voltage) is supplied that is higher than the driving voltage VL. In the example illustrated in FIG. 5, one node of the APD 201 is an anode, and the other node of the APD 201 is a cathode. A reverse bias voltage that causes the APD 201 to perform avalanche multiplication operations is supplied to the anode and the cathode of the APD 201. A charge that is generated by incident light undergoes avalanche multiplication, and an avalanche current is generated by a state in which such a voltage is supplied.

It should be noted that the APD 201 has a Geiger mode, in which, in a case in which a reverse bias voltage is supplied, the APD 201 is operated at a voltage difference between the anode and the cathode that is greater than the breakdown voltage, and a linear mode, in which the APD 201 is operated at a voltage difference between the anode and the cathode that is near or below the breakdown voltage. Hereinafter, the APD 201 that is being operated in the Geiger mode may be referred to as a SPAD. In the SPAD, for example, the driving voltage VL (first voltage) is - 30 V, and the driving voltage VH (second voltage) is 1 V.

The signal processing circuit 103 has a quenching element 202, a waveform shaping unit 210, a counter circuit 211, and a memory circuit 212. The quenching element 202 is connected to a power supply line to which the driving voltage VH is supplied and to one node from among the anode and the cathode of the APD 201. The quenching element 202 functions as a load circuit (quenching circuit) during signal multiplication due to avalanche multiplication, suppresses a voltage that is supplied to the APD 201, and thereby suppresses avalanche multiplication (quenching operation). The quenching element 202 also restores the voltage that is supplied to the APD 201 to the driving voltage VH (recharge operation) by allowing a current that corresponds to the voltage drop amount from during the quenching operation to flow. The waveform shaping unit 210 shapes a voltage change at the cathode of the APD 201 that was obtained during photon detection, and outputs a pulse signal. As the waveform shaping unit 210, examples include an inverter circuit. Although in the example illustrated in FIG. 5, one inverter is used as the waveform shaping unit 210, a circuit in which a plurality of inverters are connected in series may be used as the waveform shaping unit 210, or any other circuit having a waveform-shaping effect may be used as the waveform shaping unit 210.

The counter circuit 211 counts the number of pulses that are output from the waveform shaping unit 210 and holds a count value. When a control pulse RES is supplied via a drive line 213, a signal that is held in the counter circuit 211 is reset. Here, the counter circuit 211 generates a signal based on a difference between the count value at a start of the accumulation period and the count value at an end of the accumulation period. The memory circuit 212 is supplied with a control pulse SEL via a drive line 214 from the vertical scanning circuit 110 (see FIG. 4), and switches between a connected state and a disconnected state of the counter circuit 211 and the vertical signal line 113. The memory circuit 212 functions as a memory that temporarily stores a count value of the counter, and outputs an output signal from the counter circuit 211 of the pixel 101 to the vertical signal line 113. Note that by providing a switch such as a transistor between the quenching element 202 and the APD 201 and/or between the photoelectric conversion unit 102 and the signal processing circuit 103, electrical connection may be switched on and off. Additionally, supply of the driving voltage VH and the driving voltage VL, which are supplied to the photoelectric conversion unit 102, may be electrically switched by a switch such as a transistor.

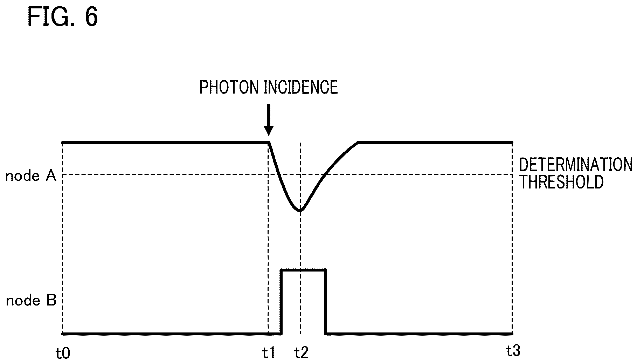

FIG. 6 is a diagram illustrating a relation between operation of the APD 201 and an output signal. In FIG. 6, the input side of the waveform shaping unit 210 is denoted as a node A, and the output side of the waveform shaping unit 210 is denoted as a node B. Between a time to and a time t1, a potential difference of VH - VL is applied to the APD 201. When a photon is incident on the APD 201 at time t1, avalanche multiplication occurs in the APD 201, an avalanche multiplication current flows through the quenching element 202, and the voltage of the node A drops. Thereafter, when the voltage drop amount further increases and a potential difference that is applied to the APD 201 decreases, avalanche multiplication of the APD 201 stops at a time t2, and the voltage level of the node A does not drop to at or below a certain value. Thereafter, between the time t2 and a time t3, a current that compensates for the voltage drop flows from the driving voltage VL to the node A, and the node A settles to the original potential level at the time t3. At this time, a portion of an output waveform at the node A that exceeds a certain threshold is waveform-shaped by the waveform shaping unit 210 and is output as a pulse signal at the node B.

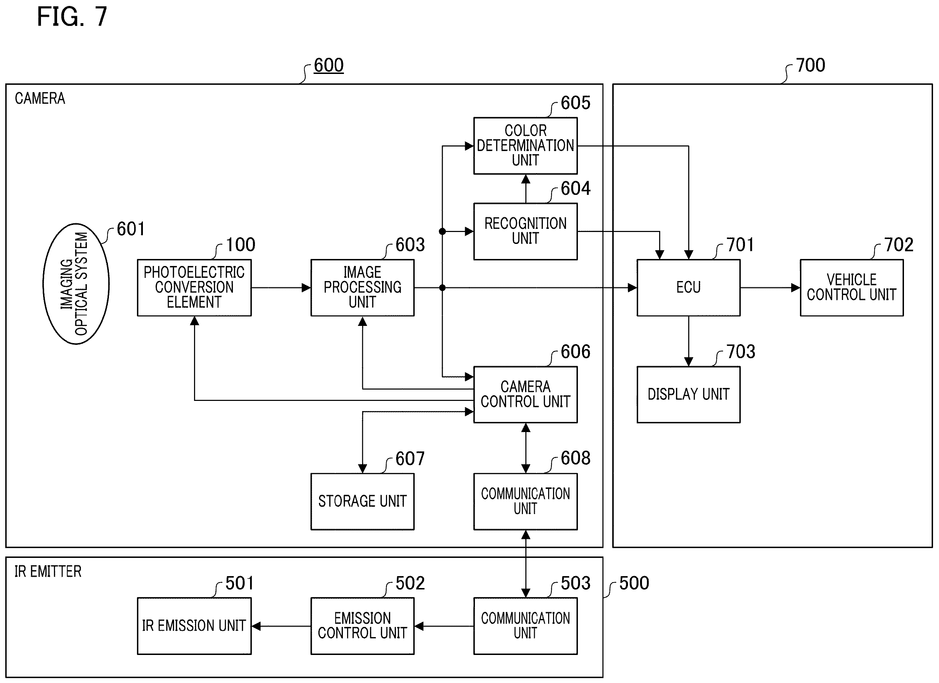

FIG. 7 is a diagram illustrating a functional arrangement of an IR emitter 500, a camera 600, and a moving object 700. Each of the IR emitter 500, the camera 600, and the moving object 700 realize various functions to be described below by causing a computer (not illustrated) to execute a computer program stored in a memory (not illustrated) serving as a storage medium. However, a part or all of the functions of the IR emitter 500, the camera 600, and the moving object 700 may be realized by hardware. An exclusive circuit (ASIC), a processor (reconfigurable processor, DSP), and the like are given as examples of the hardware.

The camera 600 has the above-described photoelectric conversion element 100. The camera 600 also has an image-forming optical system 601, an image processing unit 603, a recognition unit 604, a color determination unit 605, a camera control unit 606, a storage unit 607, and a communication unit 608. The image processing unit 603 performs processing on an image signal that has been acquired by the photoelectric conversion element 100, and generates a final image signal. As processing performed by the image processing unit 603, examples include image processing such as black-level correction, gamma-curve adjustment, noise reduction, digital gain adjustment, demosaicing, and data compression. An image signal that is output from the photoelectric conversion element 100 passes through the color filter 30 and becomes, for example, an R signal, a G signal, a B signal, and an IR signal. The image processing unit 603 generates a color image by performing demosaicing and the like on the R signal, the G signal, and the B signal among these signals. The image processing unit 603 may also perform processing such as white-balance correction and color conversion. Additionally, the image processing unit 603 generates an IR image by using an IR signal. The IR image has no color information and is generated as a monochrome image. It should be noted that the image processing unit 603 may perform different image processing for color image generation and IR image generation. Note that the IR image is an example of the first image. Additionally, the color image is an example of the second image. Additionally, the image processing unit 603 outputs the generated image signal to the recognition unit 604, the color determination unit 605, the camera control unit 606, and an ECU (Electric Control Unit) 701 of the moving object 700 to be described below. At this time, the image signal output from the image processing unit 603 includes the color image and the IR image.

The recognition unit 604, which serves as an example of a recognition processing unit, performs image recognition on an image signal in order to recognize an object displayed in the image. As objects recognized by the recognition unit 604, examples include an animal such as a human, a moving object such as a vehicle, a traffic signal, and a sign such as a road sign. The recognition unit 604 performs image recognition by using, for example, deep learning. As the deep learning, examples include YOLO (You Only Look Once), SSD (Single Shot MultiBox Detector), Faster R-CNN (Regional Convolution Neural Network), Fast R-CNN, and R-CNN. In the present embodiment, the recognition unit 604 performs image recognition by using an IR image. In this case, as compared to a configuration in which a color image is used, even in a case in which imaging is performed under poor visibility such as at night or in bad weather, the object is recognized with higher accuracy to the extent that a contour of the object becomes easier to capture. This is because the IR image is an image generated by imaging with infrared light, which has a longer wavelength than visible light, and which is less likely to be scattered by water droplets in the air, and enables a distant object to be clearly imaged without being disturbed by fog. Additionally, the recognition unit 604 calculates a distance from the camera 600 to a recognized object. As a method of distance measurement by the recognition unit 604, examples include a method of estimating a distance by using deep learning. As one example, the recognition unit 604 may calculate a distance by using deep learning to analyze information such as blur in an image of a detected object. Additionally, as another example, the recognition unit 604 may perform distance measurement by using the camera 600 as a stereo camera and applying the principle of triangulation method. The recognition unit 604 outputs, to the color determination unit 605 and the ECU 701 of the moving object 700, information indicating a type of the recognized object, coordinates indicating a position of the object in the image, and information indicating a distance from the camera 600 to the object as recognition results. Note that processing in which the recognition unit 604 recognizes the type of the recognized object, the coordinates indicating the position of the object in the image, and the distance from the camera 600 to the object may be considered to be recognition processing. Additionally, a processing step performed by the recognition unit 604 may also be considered to be a recognition step of performing object recognition processing by using an IR image.

The color determination unit 605, as one example of a color determination selection unit, determines a color of an object that is recognized by the recognition unit 604 by using a color image that was received from the image processing unit 603. In a case in which an object that is recognized by the recognition unit 604 is an object that has been predetermined to be a target of color determination, the color determination unit 605 performs color determination for this object. In this case, the color determination unit 605 determines, in the color image, a region as a target for color determination based on coordinates indicating the position of the object, which are output as a recognition result by the recognition unit 604. Then, the color determination unit 605 performs color determination on the target region in the color image by a color determination method that corresponds to the object that was recognized by the recognition unit 604. Note that the targets of color determination and the methods of color determination by the color determination unit 605 will be described in detail below. The color determination unit 605 outputs the result of the color determination to the ECU 701 of the moving object 700. Note that a processing step performed by the color determination unit 605 may also be considered to be a color determination step in which color determination processing that was selected in a color determination selection step is executed on a region that was selected in a color determination region selection step by using the color image generated by the photoelectric conversion element 100.

The camera control unit 606 has a CPU and a memory in which a computer program is stored, and controls the camera 600 by causing the CPU to execute the computer program stored in the memory. Examples of control performed by the camera control unit 606 include control of the length of the exposure period for each frame of the photoelectric conversion element 100 via the control pulse generating unit 115, and control of the timing of control signals. Additionally, the camera control unit 606 instructs the IR emitter 500 to emit light via the communication unit 608. The storage unit 607 has a recording medium such as a memory card and a hard disk and stores an image signal. The communication unit 608 has a wireless or wired interface and communicates with an external apparatus. The communication unit 608 performs output of an image signal to the exterior of the camera 600 and reception of various signals from the exterior of the camera 600 by communication. The communication unit 608 also transmits an instruction from the camera control unit 606 to the IR emitter 500 via the communication unit 503 of the IR emitter 500.

The IR emitter 500 has an IR emission unit 501, an emission control unit 502, and the communication unit 503. The IR emission unit 501 is, for example, a near-infrared LED. The IR emission unit 501 has a lens (not illustrated) and an emission unit (not illustrated), and outputs IR light at a timing and for a period of time that have been determined according to a control signal output from the emission control unit 502. The emission control unit 502 receives an emission instruction from the camera control unit 606 via the communication unit 503, generates a control signal for emitting light at an instructed timing, and outputs the generated control signal to the IR emission unit 501. The control signal generated in the emission control unit 502 includes information indicating a time period of emission, an emission cycle, a number of emissions, and the like. The communication unit 503 communicates with the camera 600 via the communication unit 608 of the camera 600, receives an emission instruction from the camera control unit 606, and transmits the received emission instruction to the emission control unit 502.

The camera 600 and the IR emitter 500 may be considered to be an imaging apparatus. Additionally, in the present embodiment, the camera 600 and the IR emitter 500 are mounted on the moving object 700. Therefore, the camera 600, the IR emitter 500, and the moving object 700 may also be considered to be, in a broad sense, an imaging apparatus. Additionally, in the present embodiment, a camera unit that includes the image-forming optical system 601 and the photoelectric conversion element 100 is provided so as to capture at least one direction among the front, the rear, and a side of the moving object. Additionally, a plurality of camera units may be provided on the moving object. Additionally, the IR emitter 500 is disposed, for example, at the front of the moving object 700.

Hereinafter, explanation will be provided on the assumption that the moving object 700 is an automobile capable of automatic driving. The moving object 700 has the ECU 701, a vehicle control unit 702, and a display unit 703. The ECU 701, serves as one example of an operation determination unit, and has a CPU and a memory that stores a computer program, and controls the moving object 700 by causing the CPU to execute the computer program that is stored in the memory. When the ECU 701 receives a recognition result from the recognition unit 604 and a color determination result from the color determination unit 605, the ECU 701 determines control of the moving object 700 according to the recognition results and color determination results that have been received. As the control contents of the moving object 700, examples include stop control of the moving object 700 by an automatic brake. The ECU 701 outputs information indicating the determined control content to the vehicle control unit 702 and the display unit 703. The ECU 701 also transmits the received images to the display unit 703 when receiving a color image and an IR image from the image processing unit 603.

The vehicle control unit 702 controls operation of the moving object 700 based on an instruction from the ECU 701. Examples of control of the moving object 700 by the vehicle control unit 702 include driving, stopping, and controlling a direction of the moving object 700. The display unit 703 is a display unit that displays an image. As the display unit 703, examples include a liquid crystal device, an organic EL, and the like. According to an instruction from the ECU 701, the display unit 703 displays various kinds of information, such as an image acquired by the photoelectric conversion element 100, a recognition result from the recognition unit 604, a color determination result from the color determination unit 605, and the traveling state of the moving object 700.

It should be noted that the image processing unit 603 and the recognition unit 604 of the camera 600 may be provided, for example, in an external terminal instead of being mounted on the moving object 700. Examples of external terminals include a terminal that remotely controls the moving object 700 and a terminal that monitors the traveling state of the moving object 700. Additionally, as illustrated in FIG. 7, the functional units of the camera 600, the IR emitter 500, and the moving object 700 may be configured by being provided separately in a plurality of apparatuses, in addition to being provided in a single apparatus.

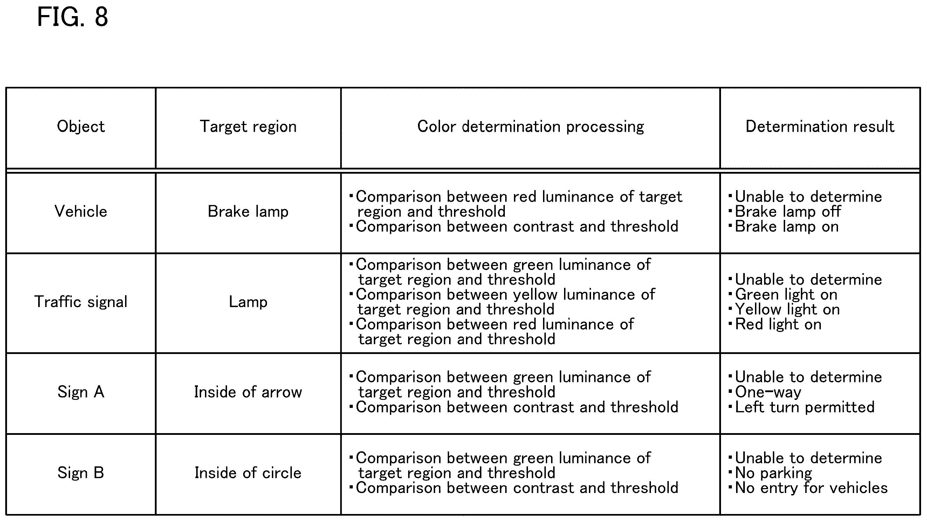

FIG. 8 is a diagram illustrating an object management table. The object management table is a table for managing objects that are targets of color determination by the color determination unit 605 of the camera 600. The object management table is stored, for example, in the storage unit 607. In the object management table, "Object," "Target Region," "Color Determination Processing," and "Determination Result" are shown in association with one another.

A specific explanation will be given regarding content of the object management table. In "Object," a type of object that is a target of color determination by the color determination unit 605 is indicated. When the color determination unit 605 receives a recognition result from the recognition unit 604, it specifies a type of object recognized by the recognition unit 604 based on the received recognition result. Then, in a case in which the specified type of the object is indicated in the "Object" field of the object management table, the color determination unit 605 performs color determination for this object, and in a case in which it is not indicated in the "Object" field, the color determination unit 605 does not perform color determination for this object. In "Target Region," among the "objects" that are displayed in the color image, the region to be targeted for color determination by the color determination unit 605 is indicated. The color determination processing is processing by which the color determination unit 605 determines the color of an object that is displayed in the color image. Hereinafter, among the "objects" displayed in the color image, the region to be targeted for color determination by the color determination unit 605 may be referred to as a target region. In "Color Determination Processing," the content of the color determination processing performed by the color determination unit 605 for the "Target Region" of the "Object" is indicated. In "Determination Result," candidates of a color determination result by the color determination unit 605 are indicated. The color determination unit 605 determines, as the result of the color determination processing for the "Object," a result from among candidates that are shown in the "Determination Result" that is associated with the "Object."

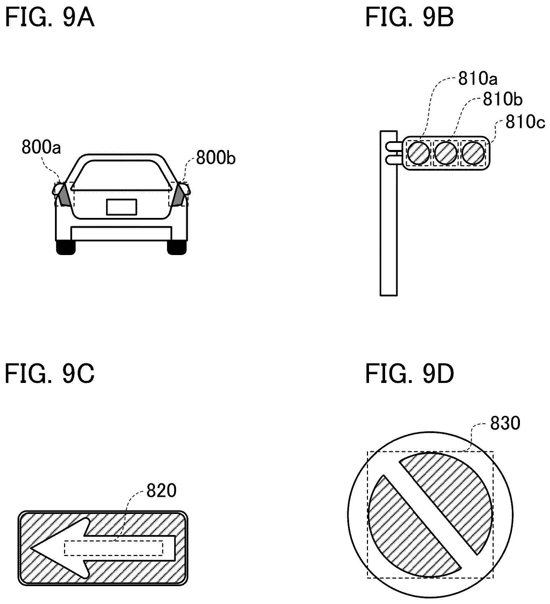

An explanation will be given regarding the content shown in each item of the object management table, together with specific examples of objects illustrated in FIG. 9. In the present embodiment, in a case in which it becomes necessary to control the moving object 700 according to the color of a specific portion of an object that has been recognized by the recognition unit 604, this object is defined as a target of the color determination processing by the color determination unit 605. More specifically, this object is indicated in the "Object" field of the object management table, and the above-described specific portion of the object is indicated in the "Target Region" field of the object management table.

In the "Object" field of the object management table, a "vehicle" illustrated in FIG. 9A is indicated. In a case in which the camera 600 photographs the front of the moving object 700, information that indicates which state from among a traveling state, a stopped state, an accelerating state, and a decelerating state, the vehicle in front of the moving object 700 is in is necessary in order to realize automatic driving of the moving object 700 according to the state of the vehicle in front of the moving object 700. As automatic driving of the moving object 700 according to a state of a vehicle that is in front of the moving object 700, for example, examples can be given such as the moving object 700 stopping to prevent a collision with the vehicle in front of the moving object 700 according to a state in which the vehicle in front of the moving object 700 is stopped. Automatic driving of the moving object 700 according to a state of a vehicle in front is required control even in a state in which a vehicle that is displayed in an image is difficult to detect, such as in poor visibility at night or in bad weather, as compared to good visibility such as in fine weather. Additionally, the recognition unit 604 recognizes a vehicle from an IR image in which the vehicle is displayed, while not recognizing which state the vehicle is in from among a traveling state, a stopped state, an accelerating state, and a decelerating state. Therefore, in the present embodiment, the vehicle is indicated in the "Object" field of the object management table as a target of color determination processing. Additionally, a brake lamp, which is a portion for which information indicating what color is being shown is necessary in order to determine whether or not there is a state in which the vehicle is decelerating, is indicated in the "Target Region" field of the object management table. The "brake lamp" that is indicated in "Target Region" means a left brake lamp 800a and a right brake lamp 800b illustrated in FIG. 9A. Additionally, whether or not the vehicle is decelerating is specified by whether or not the brake lamp is lit in red. Therefore, the contents of the processing relating to the presence or absence of a brake lamp that is lit in red is indicated in "Color Determination Processing" of the object management table. "Comparison between the red luminance of the target region and a threshold", which is indicated in "Color Determination Processing", means that, as the color determination processing, the color determination unit 605 calculates an average value of red luminance for the "Target Region" in the color image and determines whether or not the calculated average value exceeds the threshold. Additionally, "comparison between contrast and a threshold, which is indicated in "Color Determination Processing", means that as the color determination processing, the color determination unit 605 calculates an average value for the contrast of the "Object" in the color image and determines whether or not the calculated average value exceeds the threshold. Additionally, "unable to determine," "brake lamp off," and "brake lamp on" are indicated in "Determination Result", which is associated with the "vehicle,". As a result of the "Color Determination Processing," in a case in which the average value of the red luminance that has been calculated for the "Target Region" is equal to or less than the threshold, the color determination unit 605 determines that the determination result is "brake lamp off". Additionally, as a result of the "Color Determination Processing," in a case in which the average value of the red luminance that has been calculated for the "Target Region" exceeds the threshold, the color determination unit 605 determines that the determination result is "brake lamp on." Additionally, as a result of the "Color Determination Processing," in a case in which the average value of contrast that was calculated for the "Object" is equal to or less than the threshold, the color determination unit 605 determines that the determination result is "unable to determine," regardless of whether or not the average value of the red luminance that has been calculated for the "Target Region" exceeds the threshold. This means that, in a case in which the average value of contrast of the object is low, it is difficult for the color determination unit 605 to determine whether the brake lamp is lit or unlit.

Additionally, a "traffic signal" that is illustrated in FIG. 9B is indicated in the "Object" field of the object management table. In a case in which the camera 600 captures an image of the front of the moving object 700, information that indicates the state of a traffic signal in front of the moving object 700 from among a red signal lit state, a yellow signal lit state, and a green signal lit state is necessary in order to realize automatic driving of the moving object 700 according to the state of the traffic signal. As automatic driving of the moving object 700 according to the state of a traffic signal, examples include stopping the moving object 700 when a traffic signal in front of the moving object 700 is in a red signal lit state or a yellow signal lit state and traveling of the moving object 700 when the traffic signal in front of the moving object 700 is in a green signal lit state. Additionally, automatic driving of the moving object 700 according to the state of a traffic signal is a required control even in a state in which a traffic signal that is displayed in an image is difficult to detect, such as in poor visibility at night or in bad weather, as compared to good visibility such as in fine weather. Additionally, while the recognition unit 604 recognizes a traffic signal from an IR image in which the traffic signal is displayed, it does not recognize the color with which the traffic signal is lit. Therefore, in the present embodiment, the traffic signal is indicated as a target of color determination processing in the "Object" field of the object management table. Additionally, a lamp, which is a portion that is necessary in order to determine the color with which the traffic signal is lit, is indicated as the "Target Region" field in the object management table. The "lamp" that is indicated in "Target Region" means a green lamp 810a, a yellow lamp 810b, and a red lamp 810c that are shown in FIG. 9B. Additionally, the color with which the traffic signal is lit is specified based on which of green, yellow, or red the lamp is lit in. Accordingly, the content of the processing relating to presence or absence of lighting of the green lamp 810a, the yellow lamp 810b, and the red lamp 810c is indicated as "Color Determination Processing" in the object management table. "Comparison between the green luminance of the target region and a threshold" of "Color Determination Processing" means that, as the color determination processing, the color determination unit 605 calculates an average value of green luminance for the "Target Region" corresponding to the green lamp 810a in the color image and determines whether or not the calculated average value exceeds the threshold. "Comparison between the yellow luminance of the target region and a threshold" of "Color Determination Processing" means that, as the color determination processing, the color determination unit 605 calculates an average value of yellow luminance for the "Target Region" corresponding to the yellow lamp 810b in the color image and determines whether or not the calculated average value exceeds the threshold. "Comparison between red luminance of the target region and a threshold" of "Color Determination Processing" means that, as the color determination processing, the color determination unit 605 calculates an average value of red luminance for the "Target Region" corresponding to the red lamp 810c in the color image and determines whether or not the calculated average value exceeds the threshold. Additionally, "unable to determine", "Green signal lit", "Yellow signal lit", and "Red signal lit" are indicated in "Determination Result", which is associated with "traffic signal". As a result of the "Color Determination Processing," in a case in which the average value of the green luminance that was calculated for the "Target Region" corresponding to the green lamp 810a exceeds a threshold, the color determination unit 605 determines the determination result to be "Green signal lit." Additionally, as a result of the "Color Determination Processing," in a case in which the average value of the yellow luminance that was calculated for the "Target Region" corresponding to the yellow lamp 810b exceeds a threshold, the color determination unit 605 determines the determination result to be "Yellow signal lit". Additionally, as a result of the "Color Determination Processing", in a case in which the average value of red luminance that was calculated for the "Target Region" corresponding to the red lamp 810c exceeds a threshold, the color determination unit 605 determines the determination result to be "Red signal lit". There are cases in which the average value of the green luminance in the "Target Region" of the green lamp 810a, the average value of the yellow luminance in the "Target Region" of the yellow lamp 810b, and the average value of the red luminance in the "Target Region" of the red lamp 810c are all equal to or less than the thresholds. In this case, the color determination unit 605 determines the determination result to be "unable to determine". This "Unable to determine" is a determination result that may occur in a state of poor visibility such as at night or in bad weather, or in a case in which the distance from the moving object 700 to the traffic signal is long. Note that a threshold for comparison with the green luminance, a threshold for comparison with the yellow luminance, and a threshold for comparison with the red luminance may be the same or different. Additionally, the method of color determination processing that is performed by the color determination unit 605 is not limited to the above examples. The color determination unit 605 compares the average value of the green luminance that has been calculated for the "Target Region" of the green lamp 810a, the average value of the yellow luminance that has been calculated for the "Target Region" of the yellow lamp 810b, and the average value of the red luminance that has been calculated for the "Target Region" of the red lamp 810c. Then, the color determination unit 605 may output a determination result that the lighting state of the traffic signal is the color having the highest luminance average value. Additionally, there are cases in which two or more values from among the average value of green luminance in the "Target Region" of the green lamp 810a, the average value of yellow luminance in the "Target Region" of the yellow lamp 810b, and the average value of red luminance in the "Target Region" of the red lamp 810c exceed the thresholds. In this case, the color determination unit 605 may determine the determination result to be "Unable to determine".

Additionally, "Sign A" is also indicated in the "Object" field of the object management table. "Sign A" means a road sign in which a leftward arrow is shown, as illustrated in FIG. 9C. Hereinafter, the road sign in which a leftward arrow is shown, as illustrated in FIG. 9C, may simply be referred to as sign A. In Japan, a sign A in which the color of the arrow is white indicates what is referred to as one-way traffic, which means that a vehicle can only travel in the direction that is indicated by the arrow. Additionally, in Japan, a sign A in which the color of the arrow is blue indicates what is referred to as left turn permitted, which means that a vehicle can turn in the direction that is indicated by the arrow. Therefore, in a case in which the camera 600 photographs the front of the moving object 700, whether the arrow that is shown in a sign A that is in front of the moving object is white or blue is information that is necessary in order to realize automatic driving of the moving object 700 according to the type of sign A. As automatic driving of the moving object 700 according to the type of sign A, examples include restricting the moving object 700 from traveling in a direction that is different from the direction that is indicated by the arrow of sign A in response to the arrow shown in sign A in front of the moving object 700 being white. Additionally, automatic driving of the moving object 700 according to the type of sign A is a required control even in a state in which a traffic signal that is displayed in an image is difficult to detect, such as in poor visibility at night or in bad weather, as compared to good visibility such as in fine weather. Additionally, while the recognition unit 604 recognizes a sign A from an IR image in which the sign A is displayed, the recognition unit 604 does not recognize whether this sign A is a road sign indicating one-way traffic or a road sign indicating that left turns are permitted. Therefore, in the present embodiment, the sign A is shown as a target of color determination processing in the "Object" field of the object management table. Additionally, the inside of the arrow, which is a portion that is necessary in order to determine which color the arrow shown in the sign A is, is indicated in "Target Region" of the object management table. The "inside of the arrow" that is indicated in "Target Region" means an inside 820 of the arrow of the sign A that is shown in FIG. 9C. Additionally, the type of the sign A is specified by whether the arrow of the sign A is indicated in blue or white. Therefore, the contents of processing relating to the presence or absence of display in blue of the inside 820 of the arrow of sign A is indicated in the "Color Determination Processing" fieldd of the object management table. "Comparison between the blue luminance of the target region and a threshold" of "Color Determination Processing" means that, as the color determination processing, the color determination unit 605 calculates an average blue luminance value of the "Target Region" in the color image and determines whether the calculated average value exceeds the threshold. Additionally, "comparison between contrast and a threshold" that is indicated in "Color Determination Processing" means that, as the color determination processing, the color determination unit 605 calculates an average value of the contrast of the "Object" in the color image and determines whether or not the calculated average value exceeds the threshold. Additionally, "unable to determine", "one-way traffic", and "left turn permitted" are indicated in the "Determination Result" that is associated with the "sign A". As a result of the "Color Determination Processing", in a case in which the average value of the blue luminance that has been calculated for the "Target Region" exceeds a threshold, the color determination unit 605 determines that the determination result is "One-way traffic." Additionally, as a result of the "Color Determination Processing", in a case in which the average value of the blue luminance that has been calculated for the "Target Region" is equal to or less than a threshold, the color determination unit 605 determines that the determination result is "Left turn permitted". Additionally, as a result of the "Color Determination Processing", in a case in which the average value of the contrast that has been calculated for the "Object" is equal to or less than a threshold, the color determination unit 605 determines that the determination result is "unable to determine" regardless of whether or not the average value of the blue luminance that was calculated for the "Target Region" exceeds the threshold. This means that in a case in which the average contrast value of an object is low, it is difficult for the color determination unit 605 to determine the display color of the arrow of the sign A. Thus, in the present embodiment, in view of the fact that objects that have similar shapes and different display colors exist, these objects are defined in advance in the object management table as targets of color determination processing.

Additionally, in the "Object" field of the object management table, "sign B" is also indicated. "Sign B" means a road sign in which a diagonal line is shown inside a circle, as illustrated in FIG. 9D. Hereinafter, the road sign in which a diagonal line is shown inside a circle, as illustrated in FIG. 9D, may simply be referred to as the sign B. In Japan, if the color inside of the circle in the sign B is blue, this means that it is prohibited to park a vehicle in this location. Additionally, in Japan, if the color inside of the circle in the sign B is white, this indicates that there is no entry for vehicles. Therefore, in a case in which the camera 600 captures the front of the moving object 700, whether the inside of the circle that is shown in the sign B in front of the moving object 700 is blue or white is information that is necessary in order to realize automatic driving of the moving object 700 according to the type of sign B. As automatic driving of the moving object 700 according to a type of sign B, examples include restricting parking of the moving object 700 in response to the inside of the circle that is shown in the sign B in front of the moving object 700 being blue. Additionally, as automatic driving of the moving object 700 according to a type of sign B, examples include restricting traveling of the moving object 700 in response to the inside of the circle that is shown in the sign B that is in front of the moving object 700 being white. Additionally, automatic driving of the moving object 700 according to a type of sign B is a required control even in a state in which a sign B that is displayed in an image is difficult to detect, such as in poor visibility at night or in bad weather, as compared to good visibility such as in fine weather. Additionally, while the recognition unit 604 recognizes the sign B from an IR image in which the sign B is displayed, it does not recognize whether this sign B indicates no parking or no entry for vehicles. Therefore, in the present embodiment, the sign B is indicated in the "Object" field of the object management table as a target of the color determination processing. Additionally, the color that is shown inside the circle, which is a portion that is necessary in order to determine a type of the sign B, is shown in the "Target Region" field of the object management table. "Inside the circle", which is shown in "Target Region", means an inside 830 of the circle of the sign B that is shown in FIG. 9D. Additionally, the type of the sign B is specified according to whether the inside 830 of the circle of sign B is shown in blue or white. Therefore, the contents of the processing relating to the presence or absence of display in blue of the inside 830 of the circle of the sign B is indicated in the "Color Determination Processing" field of the object management table. "Comparison between the blue luminance of the target region and a threshold" of "Color Determination Processing" means that, as the color determination processing, the color determination unit 605 calculates an average blue luminance value of the "Target Region" in the color image and determines whether or not the calculated average value exceeds the threshold. Additionally, "comparison between contrast and a threshold", which is indicated in "Color Determination Processing", means that as the color determination processing, the color determination unit 605 calculates an average value for the contrast of the "Object" in the color image and determines whether or not the calculated average value exceeds the threshold. Additionally, in the "Determination Result" that is associated with the "sign B," "unable to determine", "no parking", and "no entry for vehicles" are indicated. As a result of the "Color Determination Processing," in a case in which the average value for the blue luminance that was calculated for the "Target Region" exceeds a threshold, the color determination unit 605 determines that the determination result is "No Parking." Additionally, as a result of the "Color Determination Processing", in a case in which the average value for the blue luminance that was calculated for the "Target Region" is equal to or less than a threshold, the color determination unit 605 determines that the determination result is "No Entry for Vehicles." Additionally, as a result of the "Color Determination Processing", in a case in which an average value for the contrast that was calculated for the "Object" is equal to or less than a threshold, the color determination unit 605 determines that the determination result is "unable to determine" regardless of whether or not the average value for the blue luminance that was calculated for the "Target Region" exceeds the threshold. This means that, in a case in which the average value of the contrast for an object is low, it is difficult for the color determination unit 605 to determine the display color in the inside 830 of the circle of the sign B.

In the present embodiment, when an object that is a target of the color determination processing is recognized by the recognition unit 604, a target region is specified based on a size, a shape, and the like of the recognized object as well as the information for the "Target Region" that is indicated in the object management table in association with this object. It should be noted that specification of the target region may be performed by the recognition unit 604 or may also be performed by the color determination unit 605. Therefore, each of the recognition unit 604 and the color determination unit 605 may also be considered to be a color determination region selection unit that selects a region in which the color determination processing is to be performed based on an object that has been detected by the recognition unit 604. Additionally, processing steps performed by the recognition unit 604 and the color determination unit 605 may also be considered to be a color determination region selection step of selecting a region in which the color determination processing is to be performed based on an object that has been detected during the recognition step. Additionally, a region corresponding to an object that has been recognized by the recognition unit 604 may be specified as the target region. For example, in a case in which a "vehicle", which is an "object" that is shown in the object management table, is recognized by the recognition unit 604, different regions may be specified as target regions in a case in which this "vehicle" is an ordinary automobile, in a case in which this "vehicle" is a truck, and in a case in which this "vehicle" is a motorcycle. Additionally, for example, in a case in which a "traffic signal", which is an "Object" that is indicated in the object management table, is recognized by the recognition unit 604, different regions may be specified as target regions depending on the shape of the traffic signal, such as whether the traffic signal is vertical or horizontal.

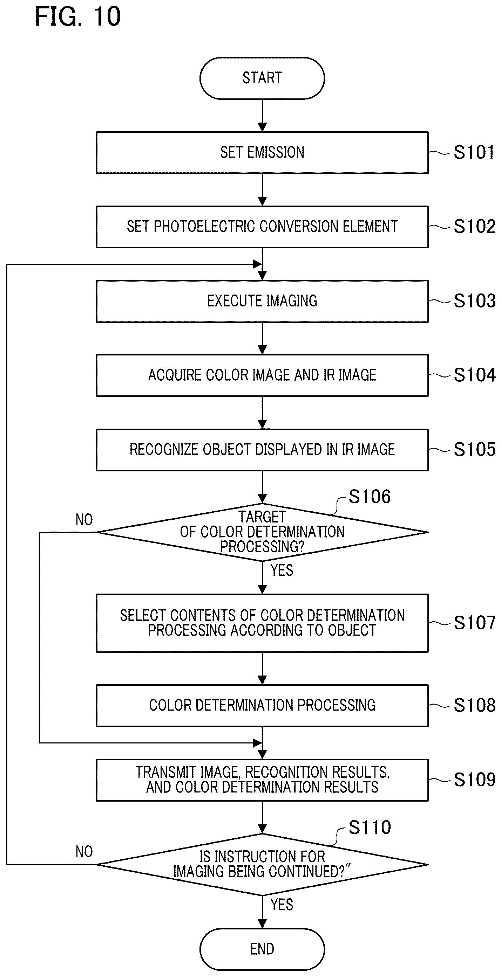

FIG. 10 is a flowchart illustrating a flow for result output processing. The result output processing is processing in which the camera 600 outputs the results of the color determination processing. In the present embodiment, for example, in a case in which the camera 600 is in a mode that performs color determination processing, when an instruction for imaging is received according to an operation of the camera 600 by a user, the result output processing is started. The camera control unit 606 performs settings for emissions by the IR emitter 500 (step (hereinafter, sometimes referred to as "S") 101). More specifically, the camera control unit 606 sets the timing of the emissions, the period of the emissions, the cycle of the emissions, the number of times that emission is performed, and the like of the IR emitter 500.

The camera control unit 606 performs settings for the photoelectric conversion element 100 (S102). More specifically, the camera control unit 606 performs various settings with respect to the circuit substrate 21 of the photoelectric conversion element 100 for photoelectrically converting an optical image from the image-forming optical system 601 and for generating an image signal. It should be noted that, in these photoelectric conversion settings, the camera control unit 606 may perform different settings for the pixel 101 of the RGB filter 31 and the pixel 101 of the IR filter 32. Additionally, at this time, the camera control unit 606 sets the parameters of the image processing unit 603, the recognition unit 604, and the color determination unit 605. The camera control unit 606 causes imaging to be executed (S103). More specifically, the camera control unit 606 instructs the IR emitter 500 to emit light according to the content that has been set in step S101, and instructs the photoelectric conversion element 100 to output a vertical synchronization signal, thereby causing exposure and generation of an image signal to be performed.

The camera control unit 606 causes the image processing unit 603 to execute various image processing on an image signal that has been output from the photoelectric conversion element 100 in the imaging that is started in step S103, thereby generating a final image signal. As a result, the image processing unit 603 acquires a color image by using R, G, and B signals that are output from the photoelectric conversion element 100 and further acquires a monochrome IR image by using an IR signal (S104).The recognition unit 604 recognizes an object that is displayed in the IR image that was acquired in step S104 (S105). More specifically, the recognition unit 604 detects an object that is displayed in the IR image, specifies coordinates indicating the position of the detected object in the IR image, and calculates the distance between the camera 600 and the detected object.

The recognition unit 604 determines whether or not an object that was recognized in step S105 is an object for which color determination processing is to be performed by the color determination unit 605 (S106). The recognition unit 604 makes a determination in step S106 based on whether or not the recognized object is a type that is indicated in the "Object" field of the object management table (see FIG. 8). In a case in which an object recognized by the recognition unit 604 is a target of the color determination processing (YES in S106), the color determination unit 605 selects the content of the color determination processing according to the recognized object (S107). The color determination unit 605 selects, as the content of color determination processing to be executed, the content that is indicated in the "Color Determination Processing" field that is associated with the recognized "Object" field in the object management table. Additionally, at this time, the target region is specified according to the recognized object.

The color determination unit 605 executes, for a target region of an object displayed in the color image, color determination processing according to the contents that were selected in step S107 (S108). In the present embodiment, since the IR image and the color image are acquired by the shared photoelectric conversion element 100, the IR image and the color image have the same angle of view. Therefore, coordinates corresponding to the target region that was specified from the IR image are also applied as coordinates of the target region in the color image. It should be noted that different photoelectric conversion elements may be used for acquisition of the IR image and acquisition of the color image. In this case, the angle of view in the IR image and the color image may differ depending on the arrangement of the pixels for each photoelectric conversion element. In a case in which the angle of view differs between an IR image and a color image, coordinate conversion processing (alignment processing) may be performed on coordinates corresponding to a target region specified from the IR image, so that the coordinates of the target region in the color image may be specified.

The camera control unit 606 transmits, to the moving object 700, the color image and the IR image that were acquired in step S104, the recognition result that was obtained by the recognition unit 604 in step S105, and the result of the color determination processing that was performed in step S108 (S109). Additionally, in a case in which an object that has been recognized by the recognition unit 604 is not a target of the color determination processing ("NO" in S106), the camera control unit 606 transmits, to the moving object 700, the color images and the IR images and the recognition results that were obtained by the recognition unit 604. The camera control unit 606 determines whether or not an instruction for imaging is being continued (S110). In a case in which the instruction for imaging is being continued ("YES" in S110), processing from step S103 is repeated. That is, in a case in which the instruction for imaging is being continued, processing from imaging is repeated for a next frame. Additionally, in a case in which the instruction for imaging is not being continued ("NO" in S110), the result output processing ends.

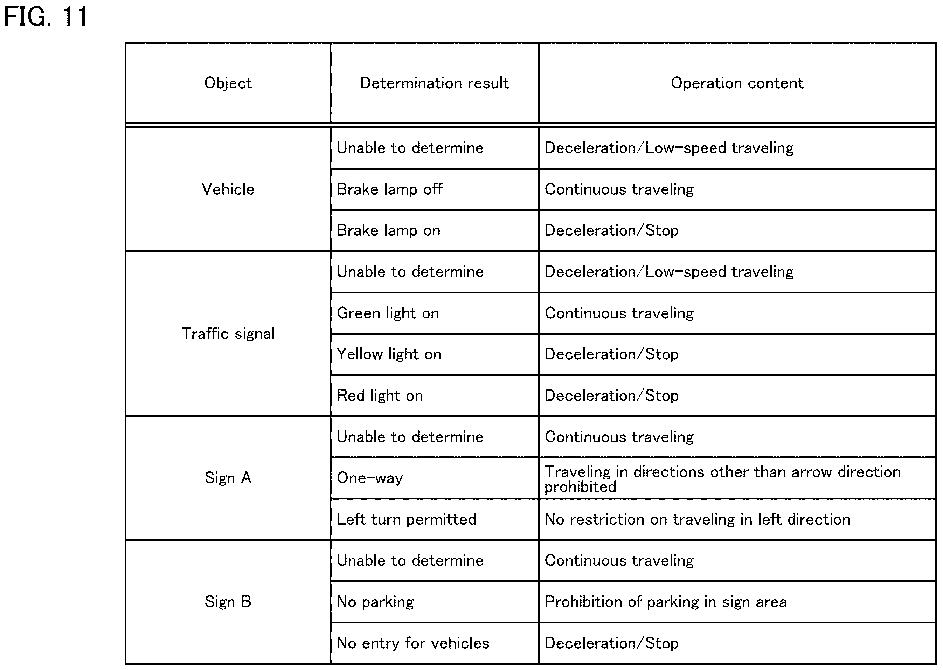

FIG. 11 is a diagram illustrating a relation management table. The relation management table is a table for managing the relations between an object that is a target of color determination processing, the results of the color determination processing, and an operation of the moving object 700. The relation management table is stored, for example, in the ECU 701. In the relation management table, "Object", "Determination Result", and "Contents of Operation" are respectively shown in association with one another.

A specific explanation will be given regarding the content of the relation management table. In "Object", the type of an object for which the color determination processing by the color determination unit 605 has been performed is indicated. In this "Object", the same items as those in the "Object" field of the object management table (see FIG. 8) are indicated. In "Determination Result", the results of the color determination processing that was performed by the color determination unit 605 are indicated. In this "Determination Result", the same items as those in the "Determination Result" field of the object management table are indicated. In "Contents of Operation", the operations by which the ECU 701 causes the moving object 700 to perform operations are indicated.

When the ECU 701 receives the recognition results for the IR image from the recognition unit 604 and the results of the color determination processing from the camera 600, it determines the contents for causing the moving object 700 to operate according to the received information. More specifically, the ECU 701 determines, as the contents for causing the moving object 700 to operate, the "Contents of Operation" that are associated in the relation management table with the "Object" that corresponds to the recognition results of the recognition unit 604 and with the "Determination Result" that corresponds to the results of the color determination processing.

A specific explanation will be given regarding the contents of the operations of the relation management table. In the relation management table, in the "Contents of Operation" field that is associated with a "vehicle" as the object and "unable to determine" as the determination result, "deceleration/low-speed traveling" is indicated. In a situation in which whether or not a brake lamp of a vehicle is lit is not specified, the brake lamp of the vehicle may be lit, that is, the vehicle may be decelerating or stopping. In this case, the travel of the moving object 700 needs to be restricted to prevent a collision between the moving object 700 and the vehicle. Therefore, in the present embodiment, to give priority to safety, "deceleration/low-speed traveling" is defined as the "Contents of Operation" such that, even in a situation in which it is not specified whether or not the brake lamp of the vehicle is lit, the travel of the moving object 700 is restricted.

Additionally, in the relation management table, in the "Contents of Operation" field that is associated with a "vehicle" as the object and "brake lamp off" as the determination result, "continuous traveling" is indicated. In a case in which the brake lamp of the vehicle is not lit, a situation is specified in which, even if the moving object 700 does not decelerate, the moving object 700 will not rapidly approach the vehicle and a collision between the moving object 700 and the vehicle is unlikely to occur. Therefore, in the present embodiment, "continuous traveling" is defined as the "Contents of Operation" in a case in which the brake lamp of the vehicle is not lit.

Additionally, in the relation management table, "deceleration/stop" is indicated in the "Contents of Operation" field that is associated with a "vehicle" as the object and "Brake lamp on" as the determination result. In a case in which the brake lamp of the vehicle is lit, when the moving object 700 continues traveling, the moving object 700 may rapidly approach the vehicle and collide with it. Therefore, in the present embodiment, "deceleration/stop" is defined as the "Contents of Operation" in a case in which the brake lamp of the vehicle is lit.

Additionally, in the relation management table, "deceleration/low-speed traveling" is indicated in the "Contents of Operation" field that is associated with a "traffic signal" as the object and "unable to determine" as the determination result. In a situation in which the color with which the traffic signal is lit is not specified, the traffic signal may be lit in yellow or red. In this case, it is necessary to restrict the travel of the moving object 700 before the moving object 700 reaches the traffic signal. Therefore, in the present embodiment, to give priority to safety, "deceleration/low-speed traveling" is defined as the "Contents of Operation" so that, even in a situation in which the color with which the traffic signal is lit is not specified, the travel of the moving object 700 is restricted.

Additionally, in the relation management table, "continuous traveling" is indicated in the "Contents of Operation" associated with a "traffic signal" as the object and "green signal lit" as the determination result. In a case in which the traffic signal is lit in green, deceleration of the moving object 700 is not required. Therefore, in the present embodiment, "Continuous Traveling" is defined as the "Contents of Operation" in a case in which the traffic signal is lit in green.

Additionally, in the relation management table, "deceleration/stop" is indicated in the "Contents of Operation" that is associated with a "traffic signal" as the object and "yellow signal lit" and "red signal lit" as the determination results. In a case in which the traffic signal is lit in yellow or red, the moving object 700 needs to stop before it reaches the traffic signal. Therefore, in the present embodiment, "deceleration/stop" is defined as the "Contents of Operation" in a case in which the traffic signal is lit in yellow or red.

Additionally, in the relation management table, "continuous traveling" is indicated in the "Contents of Operation" that is associated with a "sign A" as the object and "unable to determine" as the determination result. Additionally, in the relation management table, "prohibition of traveling in directions other than the arrow direction" is indicated in "Contents of Operation" that is associated with a "sign A" as the object and "one-way traffic" as the determination result. In a case in which the sign A is a road sign indicating one-way traffic, it is necessary to restrict the moving object 700 from traveling in directions other than the direction that is indicated by the arrow so as to comply with traffic regulations. Therefore, in the present embodiment, "prohibition of traveling in directions other than the arrow direction" is defined as the "Contents of Operation" in a case in which the sign A is a road sign indicating one-way traffic. Additionally, in the relation management table, "no restriction on traveling to the left" is indicated in the "Contents of Operation" that is associated with a "sign A" as the object and "left turn permitted" as the determination result. In a case in which the sign A is a road sign that indicates that left turns are permitted, it is not necessary to restrict the moving object 700 from turning left. Therefore, in the present embodiment, "no restriction on traveling to the left" is defined as the "Contents of Operation" in a case in which the sign A is a road sign that indicates that left turns are permitted.

Additionally, in the relation management table, "continuous traveling" is indicated in the "Contents of Operation" that is associated with the "sign B" as the object and "unable to determine" as the determination result. Additionally, in the relation management table, "prohibition of parking in the sign area" is indicated in the "Contents of Operation" associated with the "sign B" as the object and "no parking" as the determination result. In a case in which the sign B is a road sign indicating no parking, it is necessary to restrict parking of the moving object 700 in an area corresponding to a predetermined range centered on the no-parking road sign so as to comply with traffic regulations. Therefore, in the present embodiment, "prohibition of parking in the sign area" is defined as the "Contents of Operation" in a case in which the sign B is a road sign indicating no parking. Additionally, in the relation management table, in the "Contents of Operation" that is associated with the "sign B" as the object and "no entry for vehicles" as the determination result, "deceleration/stop" is indicated. In a case in which the sign B is a road sign that indicates no entry for vehicles, it is necessary to restrict the travel of the moving object 700 so as to comply with traffic regulations. Therefore, in the present embodiment, "deceleration/stop" is defined as the "Contents of Operation" in a case in which the sign B is a road sign that indicates no entry for vehicles.

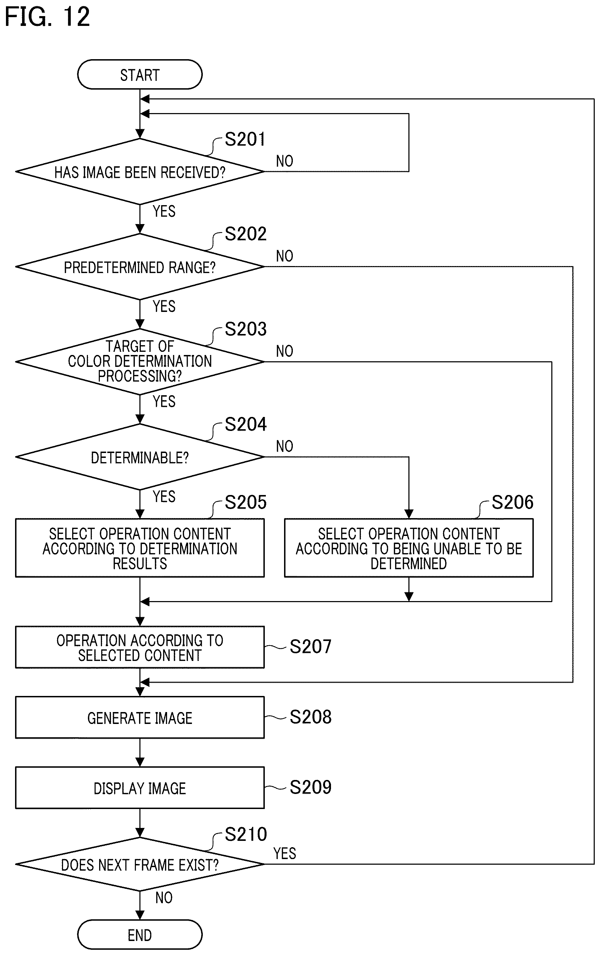

FIG. 12 is a flowchart illustrating a flow for the moving object operation processing. The moving object operation processing is processing in which the moving object 700 operates according to the results of the color determination processing by the color determination unit 605. In the present embodiment, for example, in a case in which the moving object operation processing is not being executed, the moving object operation processing is started at predetermined time intervals. The predetermined time intervals may be any time, for example, 0.1 seconds. The ECU 701 determines whether or not it has received an IR image and a color image (see step S109 of FIG. 10) that have been transmitted from the camera control unit 606 in the result output processing (S201). While a negative result continues ("NO" in S201), the processing for step S201 is repeated.

Additionally, in a case in which the image has been received by the ECU 701 ("YES" in S201), the processing proceeds to the next step. The ECU 701 determines whether or not an object that requires operation of the moving object 700 exists within a predetermined range in front of the camera 600 (S202). As the predetermined range, for example, a range that is closer than the range in which the moving object 700 can be stopped without colliding with an object during it emergency braking operation of the moving object 700 is used. In addition, an object that requires an operation of the moving object 700 is an object that needs to be detected in order to realize the autonomous driving of the moving object 700 such as an animal such as a human being, and the like. In the result output processing, the ECU 701 determines the step S202 based on the recognition result of the recognition unit 604 transmitted from the camera control unit 606.

In a case in which an object exists within the predetermined range ("YES" in S202), the processing proceeds to the next step. The ECU 701 determines whether or not the object that exists within the predetermined range is an object that is a target of the color determination processing (S203). In the result output processing, the ECU 701 makes the determination for step S203 based on the recognition results of the recognition unit 604 that have been transmitted from the camera control unit 606, and the relation management table.

In a case in which the object that exists within the predetermined range is a target of the color determination processing ("YES" in S203), the processing proceeds to the next step. The ECU 701 determines whether the color determination unit 605 can make a determination in the color determination processing (S204). The ECU 701 compares the results of the color determination processing that have been transmitted from the camera control unit 606 in the result output processing and the "Determination Result" field in the relation management table. The ECU 701 determines that the color determination unit 605 can make a determination in the color determination processing in a case in which the results to which the ECU 701 has referred result is a "Determination Result" that is different from "unable to determine" in the relation management table. Additionally, the ECU 701 determines that the color determination unit 605 cannot make a determination in the color determination processing in a case in which the to which the ECU 701 has referred is "unable to determine" in the "Determination Result" field of the relation management table.

In a case in which the color determination unit 605 can make a determination in the color determination processing ("YES" in step S204), the ECU 701 selects the contents of the operation of the moving object 700 according to the determination results (S205). More specifically, the ECU 701 compares the results of the color determination processing that have been transmitted from the camera control unit 606 in the result output processing with the "Determination Result" field in the relation management table. The ECU 701 selects, as the contents of operation of the moving object 700, the "Contents of Operation" that is associated with the "Determination Result" field in the relation management table corresponding to the result to which the ECU 701 has referred. It should be noted that the "Determination Result" field in the relation management table corresponding to the result that has been referred to by the ECU 701 is the "Determination Result" that is associated with the "Object" that was recognized by the recognition unit 604.

Additionally, in a case in which the color determination unit 605 cannot make a determination in the color determination processing ("NO" in step S204), the ECU 701 selects the contents of the operation of the moving object 700 according to the determination result "unable to determine" in the color determination processing (S206). More specifically, the ECU 701 selects, as the contents of the operation of the moving object 700, the "Contents of Operation" that is associated, in the relation management table, with the "Object" that was recognized by the recognition unit 604 and with the determination result "unable to determine" in the color determination processing. The ECU 701 operates the moving object 700 according to the contents that are selected in step S205 or step S206 (S207). Additionally, there are cases in which an object that exists within the predetermined range is not a target of the color determination processing ("NO" in S203). In this case, the ECU 701 operates the moving object 700 according to the contents of a predetermined operation for each object. Examples of this operation include an operation for avoiding a collision between the moving object 700 and the object. Additionally, this operation may differ according to a distance that is calculated by the recognition unit 604 as the distance from the camera 600 to the object.

In a case in which no object exists within the predetermined range ("NO" in S202), or after step S207, the processing proceeds to the next step. The ECU 701 generates an image to be displayed on the display unit 703 (S208). The ECU 701 generates an image by superimposing, on the color image that was acquired in step S201, the results of the object detection by the recognition unit 604 for the IR image, the results of the color determination processing, information indicating the operation state of the moving object 700, and the like. The ECU 701 displays the image that was generated in step S208 on the display unit 703 (S209). As a result, the detection results for the object, the results of the color determination processing, the operation state of the moving object 700, and the like can be recognized by an occupant of the moving object 700. The ECU 701 determines whether or not a next frame exists (S210). In a case in which a next frame exists ("YES" in S210), the processing from step S201 is repeated. In a case in which a next frame does not exist ("NO" in S210), the moving object operation processing ends.

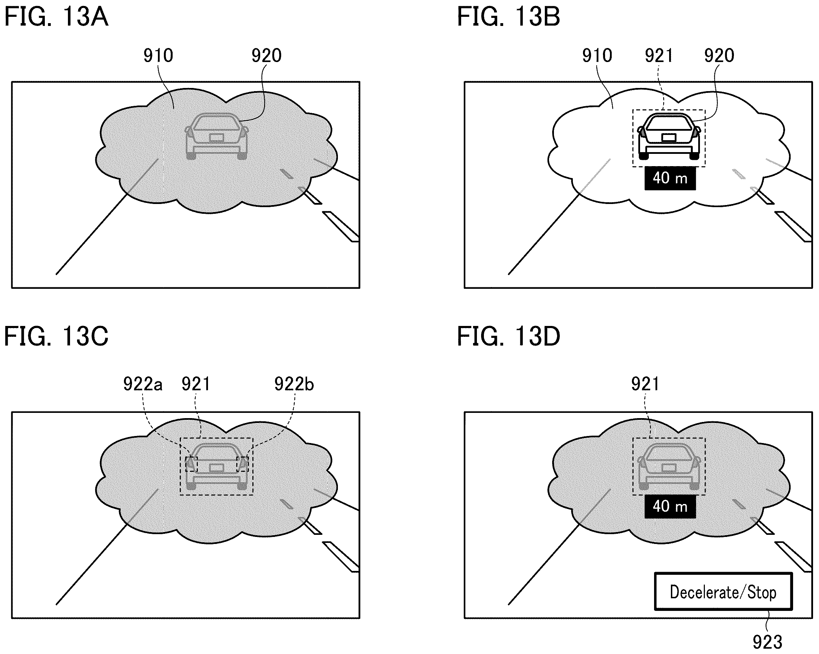

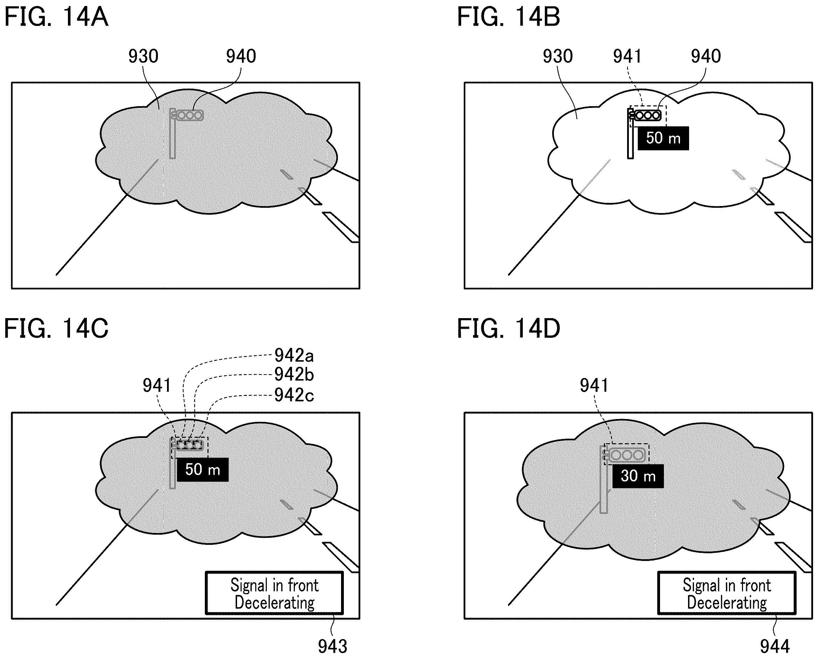

FIG. 13 and FIG. 14 are diagrams illustrating examples of the operation of the moving object 700. In the following examples, it is assumed that the camera 600 is provided on the front side of the moving object 700, and that the camera 600 captures an image of the front of the moving object 700 in the traveling direction. First, an example of the operation of the moving object 700 in a case in which an automobile exists in front of the moving object 700 will be explained. In a case in which an automobile exists in front of the moving object 700, an automobile 920 is displayed in the color image that is generated by imaging in the result output processing, as shown in FIG. 13A. Additionally, in this color image, fog 910 covering the automobile 920 is displayed, and due to this fog 910, the automobile 920 is difficult to see.

Additionally, FIG. 13B illustrates an IR image. The IR image that is illustrated in FIG. 13B is an image that is generated by the camera 600 through imaging performed simultaneously with the imaging for the color image shown in FIG. 13A. Additionally, in this IR image, as a recognition result of the automobile 920 by the recognition unit 604 in the result output processing, a region image 921 that indicates a region in which the automobile 920 is detected, and information that indicates a distance of the detected automobile 920 from the camera 600 are shown. In the illustrated example, text "40 m" is shown as the distance of the automobile 920 from the camera 600.

Additionally, in the result output processing, the color determination unit 605 performs color determination processing based on the recognition results of the recognition unit 604 that are shown in FIG. 13B. In this case, as illustrated in FIG. 13C, the color determination unit 605 displays the region image 921 superimposed on the color image, and specifies, from the region image 921, a display region of a left brake lamp 922a and a display region of a right brake lamp 922b as target regions. Then, the color determination unit 605 performs color determination processing on the specified target regions (see step S108 of FIG. 10). Hereinafter, it is assumed that the color determination unit 605 obtains a determination result of "brake lamp on" through the color determination processing. It should be noted that, in the color image, the same coordinates as those of the respective images in the IR image are applied as the coordinates in which the region image 921, the left brake lamp 922a, and the right brake lamp 922b are positioned.

In the moving object operation processing, the ECU 701 controls the moving object 700 with "deceleration/stop" as the contents of the operation, wherein "deceleration/stop" id associated in the relation management table with "vehicle, which corresponds to the automobile 920, and with "brake lamp on" as the results of the color determination processing. Additionally, as illustrated in FIG. 13D, the ECU 701 displays, on the display unit 703, a notification image 923 that includes the selected contents of the operation, and the recognition results by the recognition unit 604 (see step S209 of FIG. 12). In the notification image 923, the recognition results of the recognition unit 604, the region image 921, and the contents of the operation that has been selected by the ECU 701 are shown. By the notification image 923 and the color image being displayed on the display unit 703, an occupant of the moving object 700 recognizes that the vehicle 920 exists beyond the fog 910, and the moving object 700 decelerates/stops in autonomous driving. It should be noted that there are cases in which the results of the color determination processing with respect to the color image illustrated in FIG. 13C are "brake lamp off." In this case, in the moving object operation processing, the ECU 701 controls the moving object 700 with "continuous traveling" as the contents of the operation, wherein "continuous traveling" is associated in the relation management table with "vehicle", which corresponds to the automobile 920, and with "brake lamp off" as the results of the color determination processing.

Thus, even in a state in which visibility is poor due to nighttime conditions or bad weather, the camera 600 detects a vehicle that exists in front of the moving object 700 from the IR image with a high accuracy. Additionally, the camera 600 determines the operation state of the vehicle, such as whether or not the brake lamps are lit, by the color determination processing with respect to the color image. Then, the moving object 700 performs an operation based on the determination results of the color determination processing. As a result, collisions between the moving object 700 and a vehicle that is ahead of the moving object 700 can be inhibited when the moving object 700 performs autonomous driving.

Next, an example of the operations of the moving object 700 in a case in which a traffic signal exists in front of the moving object 700 will be explained. In a case in which a traffic signal exists in front of the moving object 700, a traffic signal 940 is displayed in the color image that is generated by imaging in the result output processing, as illustrated in FIG. 14A. Additionally, in this color image, fog 930 covering the traffic signal 940 is displayed, and due to this fog 930, the traffic signal 940 is difficult to see.

Additionally, an IR image is illustrated in FIG. 14B. The IR image that is illustrated in FIG. 14B is an image that was generated by the camera 600 through imaging that was performed simultaneously with the image of the color image that is illustrated in FIG. 14A. Additionally, in this IR image, as the recognition results of the traffic signal 940 by the recognition unit 604 in the result output processing, a region image 941 indicating a region where the traffic signal 940 is detected, and information indicating a distance of the detected traffic signal 940 from the camera 600 are shown. In the illustrated example, the text "50 m" is displayed to indicate the distance from the camera 600 to the traffic signal 940.

Additionally, in the result output processing, the color determination unit 605 performs color determination processing based on the recognition results of the recognition unit 604 that are shown in FIG. 14B. In this case, as illustrated in FIG. 14C, the color determination unit 605 displays the region image 941 as superimposed on the color image. Additionally, the color determination unit 605 specifies the display regions of a green lamp 942a, a yellow lamp 942b, and a red lamp 942c as target regions from the region image 941. Then, the color determination unit 605 performs color determination processing on the specified target regions (see step S108 of FIG. 10). Hereinafter, it is assumed that, at the time when the color image illustrated in FIG. 14C is captured, the traffic signal 940 is distant from the camera 600, and that a determination result of "unable to determine" is output to the color determination unit 605 due to the average luminance values of the respective colors in the color determination processing being below the thresholds. It should be noted that, in the color image, as the coordinates in which the region image 941, the green lamp 942a, the yellow lamp 942b, and the red lamp 942c are positioned, the same coordinates are applied as the positions of the respective images in the IR image.

In the moving object operation processing, the ECU 701 controls the moving object 700 with "deceleration/low-speed traveling" as the contents of operation, the "deceleration/low-speed traveling" being associated, in the relation management table, with "traffic signal" corresponding to the traffic signal 940 and with "unable to determine" as the result of the color determination processing. Additionally, the ECU 701 causes a notification image 943, which is illustrated in FIG. 14C, to be displayed as superimposed on the color image. The notification image 943 is an image for providing information that indicates the recognition results of the recognition unit 604, and the contents of the operation that was selected by the ECU 701. In the illustrated example, the notification image 943 shows the text "traffic in front", which is the recognition results of the recognition unit 604, and the text "decelerating", which is the contents of the operation that was selected by the ECU 701.

Thereafter, when the traveling of the moving object 700 is continued, the moving object 700 approaches the traffic signal 940. Then, when the distance from the camera 600 to the traffic signal 940 is 30 m, the result output processing is started, in which image capturing, recognition of the traffic signal 940 by the recognition unit 604, and color determination processing by the color determination unit 605 are performed. Hereinafter, it is assumed that the color determination unit 605 obtains a determination result of "red signal lit" for the color determination processing.

In the moving object operation processing, the ECU 701 controls the moving object 700 with "deceleration/stop" as the contents of operation, wherein "deceleration/stop" is associated in the relation management table with "traffic signal", which corresponds to the traffic signal 940, and with "red signal lit" as the results of the color determination processing. Additionally, as illustrated in FIG. 14D, the ECU 701 displays on the display unit 703 a notification image 944 that includes the selected contents of the operation and the recognition results of the recognition unit 604 (see step S209 of FIG. 12). In the notification image 944, the recognition results of the recognition unit 604, the region image 941, and the contents of the operation that was selected by the ECU 701 are indicated. By the notification image 944 and the color image being displayed on the display unit 703, an occupant of the moving object 700 recognizes that a traffic signal exists beyond the fog, and he moving object 700 decelerates/stops in its autonomous driving. It should be noted that there is a case in which the result of the color determination processing with respect to the color image illustrated in FIG. 14D is "green signal lit." In this case, in the moving object operation processing, the ECU 701 controls the moving object 700 according to "continuous traveling" as the contents of the operation, wherein "continuous traveling" is associated in the relation management table with "traffic signal", which corresponds to the traffic signal 940, and with "green signal lit" as the result of the color determination processing.

Thus, even in a state in which visibility is poor due to nighttime conditions, bad weather, and the like, the camera 600 detects a traffic signal that exists in front of the moving object 700 from the IR image with a high accuracy. Additionally, the camera 600 determines the lit state of the traffic signal by the color determination processing with respect to the color image. Then, the moving object 700 performs an operation based on the determination results of the color determination processing. As a result, in a case in which the moving object 700 performs autonomous driving, the moving object 700 operates according to the state of a traffic signal in front of the moving object 700. Additionally, as illustrated in FIG. 14C and FIG. 14D, in a case in which the color determination is impossible due to the object that is the target of the color determination processing being distant from the camera 600, the moving object 700 operates according to the contents of the operation that are associated with "unable to determine." Then, when the target object of the color determination processing approaches the camera 600 and the color determination becomes possible, the moving object 700 operates according to the contents of the operation that has been determined by the results of the color determination.

It should be noted that the contents of the operation of the moving object 700 according to the results of the color determination processing are not limited to the above examples. The contents of the operation of the moving object 700 according to the results of the color determination processing may include acceleration, a left turn, a right turn, a lane change, and the like. Additionally, objects that are targets of the color determination processing are not limited to a vehicle, a traffic signal, and specific road signs.

Additionally, although in the present embodiment, it has been explained that the photoelectric conversion element 100 of the camera 600 is a SPAD sensor, the present disclosure is not limited thereto. The photoelectric conversion element 100 may be a CMOS image sensor that is provided with the RGB filter 31 and the IR filter 32. That is, the first imaging element and the second imaging element may be SPAD sensors or may be CMOS image sensors. Additionally, an imaging element provided with the RGB filter 31 and an imaging element provided with the IR filter 32 may be provided in separate cameras. That is, the camera that captures the color images and the camera that captures the IR images may be different cameras.

Additionally, a control that is referred to as a range-gate control may be performed, in which the IR emission unit 501 of the IR emitter 500 emits pulsed light at a predetermined cycle, and an image sensor of the camera 600 is exposed at a predetermined timing according to a distance from the camera 600 to a subject. That is, the photoelectric conversion element 100 of the camera 600 may be exposed in synchronization with the emission cycle of the IR emission unit 501.

Additionally, although in the present embodiment it has been described that the color determination unit 605 determines the necessity of the color determination processing for an object that has been recognized by the recognition unit 604, the present disclosure is not limited thereto. The recognition unit 604 may determine the necessity of the color determination processing by the color determination unit 605 for the recognized object. Therefore, the recognition processing performed by the recognition unit 604 may also be considered to be processing for recognizing a type of object and the necessity of the color determination processing. Additionally, although in the present embodiment the color determination unit 605 selects the color determination processing to be executed according to an object that has been recognized by the recognition unit 604, the present disclosure is not limited thereto. The recognition unit 604 may select the color determination processing to be executed by the color determination unit 605 according to the recognized object. Therefore, the recognition unit 604 may also be considered to be a color determination selection unit that selects color determination processing to be executed based on an object that has been detected by the recognition unit 604. Additionally, the processing steps that are performed by the recognition unit 604 and the color determination unit 605 may also be considered to be a color determination selection step of selecting color determination processing to be executed based on an object that has been detected in the recognition step.

As described above, in the present embodiment, the color determination unit 605 executes, using a color image, color determination processing that has been selected by a color determination selection unit for a target region that has been selected by a color determination region selection unit. In this case, color determination of an object that is displayed in an image is realized by a method corresponding to the object.

Additionally, in the present embodiment, the first imaging element and the second imaging element are CMOS image sensors. In this case, the color determination of an object that is displayed in an image by a method corresponding thereto is realized by a CMOS image sensor.

Additionally, in the present embodiment, the first imaging element and the second imaging element are SPAD sensors. In this case, the color determination for an object that is displayed in an image by a method corresponding thereto is realized by a SPAD sensor.

Additionally, in the present embodiment, the recognition processing is processing that recognizes a type of object or the necessity of the color determination processing. In this case, the color determination for an object by a method corresponding to a type of object displayed in an image, and the switching of the necessity of the color determination processing according to an object that is displayed in an image are is realized.

Additionally, in the present embodiment, the imaging apparatus further includes the IR emission unit 501 that emits infrared light. In this case, it is not necessary to use an emission unit that emits infrared light for acquiring an IR image separately from the imaging apparatus.

Additionally, in the present embodiment, the first imaging element executes exposure in synchronization with an emission cycle of the IR emission unit 501. In this case, even in a state of poor visibility, a subject to be imaged can be captured more clearly.

Additionally, in the present embodiment, the color determination unit 605 calculates the contrast value in a color image of an object that has been detected by the recognition unit 604, and determines the possibility or impossibility of the color determination based on the calculated contrast value. As the contrast value, for example, values may include an average value of the contrast in the color image of the object. In this case, compared to a configuration in which the color determination is performed regardless of the contrast value in the color image of the object, the output of results for the color determination that have a low accuracy is suppressed.

Additionally, in the present embodiment, the imaging apparatus includes an ECU 701 that determines an operation of the moving object 700 on which the imaging apparatus is mounted, based on a recognition processing result by the recognition unit 604 and a color determination result by the color determination unit 605. In this case, an operation of the moving object 700 according to an object that is displayed in an image is realized.

Additionally, in the present embodiment, the ECU 701 determines the operation of the moving object 700 in a case in which the color determination is possible and in a case in which the color determination is impossible. In this case, the color determination results prevent a failure to realize the autonomous driving of the moving object 700.

Additionally, in the present embodiment, the color determination unit 605 executes color determination processing on a region of a color image that is the same as a region of an IR image in which an object that has been detected by the recognition unit 604 is displayed. In this case, it is not necessary to convert the region of the IR image in which an object that has been detected by the recognition unit 604 is displayed into a corresponding region of the color image.

Additionally, in the present embodiment, in a case in which an object that is displayed in the IR image is recognized as a vehicle by the recognition unit 604, the color determination region selection unit selects, as a target region, a left brake lamp region or a right brake lamp region of the vehicle (see FIG. 8). Additionally, the color determination selection unit selects processing for determining the color of the left and right brake lamp region of the vehicle according to the intensity of red. As the intensity of red, examples may include the red luminance. Then, the color determination unit 605 determines that the brake lamp of the vehicle is on in a case in which the intensity of red exceeds a threshold, and determines that the brake lamp of the vehicle is off in a case in which the intensity of red falls below the threshold. In this case, compared to a configuration in which colors other than red are included as targets of the color determination, the accuracy of the determination as to whether or not the brake lamp of the vehicle is lit is improved.

Additionally, in the present embodiment, in a case in which an object that is displayed in the IR image is recognized as a traffic signal by the recognition unit 604, the color determination region selection unit selects, as a target region, an illuminated region of the traffic signal (see FIG. 8). Additionally, the color determination selection unit selects processing for determining the color of the illuminated region of the traffic signal according to the intensity of green, the intensity of yellow, or the intensity of red. As the intensity of green, yellow, and red, the values may respectively include the green luminance, the yellow luminance, and the red luminance. Then, the color determination unit 605 determines that the traffic signal is lit in green in a case in which the intensity of green exceeds a threshold, determines that the traffic signal is lit in yellow in a case in which the intensity of yellow exceeds a threshold, and determines that the traffic signal is lit in red in a case in which the intensity of red exceeds a threshold. In this case, compared to a configuration in which colors other than green, yellow, and red are included as targets of the color determination, the accuracy of the color determination for the lit portion of the traffic signal is improved.

Additionally, in the present embodiment, in a case in which an object that is displayed in the IR image is recognized as the sign A by the recognition unit 604, the color determination region selection unit selects, as a target region, an arrow region of the sign A (see FIG. 8). Additionally, the color determination selection unit selects processing for determining the color of the arrow region according to the intensity of blue. As the intensity of blue, examples may include the blue luminance. Then, the color determination unit 605 determines that the road sign indicates that turning left is permitted in a case in which the intensity of blue exceeds a threshold and determines that the road sign indicates one-way in a case in which the intensity of blue falls below the threshold. In this case, compared to a configuration in which colors other than blue are included as targets in the color determination, the accuracy of the determination as to whether the sign A is a road sign indicating that turning left is permitted or a road sign indicating one-way is improved.

Additionally, in the present embodiment, in a case in which an object that is displayed in the IR image is recognized as the sign B by the recognition unit 604, the color determination region selection unit selects an inner region of a circle of the sign B as a target region (see FIG. 8). Additionally, the color determination selection unit selects processing for determining the color of the inner region of the circle according to the intensity of blue. As the intensity of blue, examples may include the blue luminance. Then, the color determination unit 605 determines that the road sign indicates no parking in a case in which the intensity of blue exceeds a threshold and determines that the road sign indicates no entry for vehicles in a case in which the intensity of blue falls below the threshold. In this case, compared to a configuration in which a color different from blue is included as a target of the color determination, the accuracy of determining whether the sign B is a road sign indicating no parking or a road sign indicating no entry for vehicles is improved.

Additionally, in the present embodiment, the color determination selection unit selects a color as a target of the color determination by the color determination unit 605 based on an object that has been detected by the recognition unit 604. In this case, compared to a configuration in which the color that is made the target of the color determination remains unchanged regardless of the object that has been detected by the recognition unit 604, the accuracy of the color determination for an object that is displayed in a color image is improved.

In addition, the present disclosure also includes a case in which a software program for realizing the functions of each of the foregoing embodiments is supplied to a system or a device having a computer capable of executing a program directly from a recording medium or using wired/wireless communication and the program is executed. Therefore, a program code itself, which is supplied to a computer and installed therein in order to realize the foregoing functional processing of the present disclosure with this computer, also realizes the present invention. Namely, the present disclosure also includes a computer program itself for realizing the function processing of the present invention. In this case, as long as it functions as a program, the program may be in any form, such as a subject code, a program executed by an interpreter, or script data supplied to an OS. For example, a recording medium for supplying a program may be a hard disk, a magnetic recording medium such as a magnetic tape, an optical/magneto-optical storage medium, or a non-volatile semiconductor memory. In addition, regarding a method for supplying a program, it is also possible to consider a method in which a computer program forming the present invention is stored in a server on a computer network and a connected client computer downloads the computer program and programs it. Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

According to the present disclosure, color determination of an object by a method corresponding to an object displayed in an image can be realized.

This application claims the benefit of Japanese Patent Application No. 2024-219783, filed December 16, 2024, which is hereby incorporated by reference wherein in its entirety.

Various embodiments have been described in detail above but it will be understood that the present disclosure is not limited to these embodiments and encompasses all modifications, variants, alternatives, and equivalents falling within the scope of the appended claims.

## Claims

1. An imaging apparatus (600) comprising:
a first imaging element (100) configured to have a photoelectric conversion unit (102) capable of receiving invisible light;
a second imaging element(100) configured to have a photoelectric conversion unit (102) capable of receiving visible light;
at least one memory storing instructions; and
at least one processor executing the stored instructions causing the imaging apparatus to:
perform object recognition processing using a first image generated by the first imaging element (100);
select a region in which color determination processing is to be performed based on an object detected by the object recognition processing;
select color determination processing to be performed based on the object detected by the object recognition processing; and
execute the selected color determination processing on the selected region using a second image generated by the second imaging element (100).

2. The imaging apparatus according to claim 1,
wherein the first imaging element and the second imaging element are CMOS image sensors.

3. The imaging apparatus according to claim 1 or 2,
wherein the first imaging element and the second imaging element are SPAD sensors.

4. The imaging apparatus according to any one of claims 1 to 3,
wherein the recognition processing is processing for recognizing a type of the object or a necessity of the color determination processing.

5. The imaging apparatus according to any one of claims 1 to 4,
wherein the invisible light is infrared light, and
wherein the imaging apparatus further comprises an emission unit (501) configured to emit infrared light.

6. The imaging apparatus according to claim 5,
wherein the first imaging element executes exposure in synchronization with an emission cycle of the emission unit.

7. The imaging apparatus according to any one of claims 1 to 6,
wherein the at least one processor executes the stored instructions further causing the imaging apparatus to: calculate a contrast value of the object in the second image detected by the recognition processing unit, and determine a possibility or impossibility of color determination based on the calculated contrast value.

8. The imaging apparatus according to any one of claims 1 to 7,
wherein the at least one processor executes the stored instructions further causing the imaging apparatus to: determine an operation of a moving object (700) on which the imaging apparatus is mounted according to a result of the object recognition processing and a result of the color determination.

9. The imaging apparatus according to claim 8,
wherein the at least one processor executes the stored instructions further causing the imaging apparatus to: determine an operation of the moving object in each of a case in which a result of color determination performed by the color determination unit is obtainable and a case in which a result of color determination performed by the color determination unit is not obtainable.

10. The imaging apparatus according to any one of claims 1 to 9,
wherein the at least one processor executes the stored instructions further causing the imaging apparatus to: execute the color determination processing on a region of the second image that is the same as a region of the first image in which the detected object is displayed, as a target region.

11. The imaging apparatus according to any one of claims 1 to 10,
wherein the at least one processor executes the stored instructions further causing the imaging apparatus to:
Recognize the object as a vehicle;
select a left and right brake lamp region of the vehicle;
select processing for determining a color of the left and right brake lamp region of the vehicle based on an intensity of red; and
determine a brake lamp of the vehicle to be lit in a case in which the intensity of red exceeds a threshold; and determine a brake lamp of the vehicle to be unlit in a case in which the intensity of red falls below the threshold.

12. The imaging apparatus according to any one of claims 1 to 11,
wherein the at least one processor executes the stored instructions further causing the imaging apparatus to:
recognize the object as a traffic signal;
select a lighting region of the traffic signal;
select processing for determining a color of the lighting region of the traffic signal based on an intensity of green, an intensity of yellow, and an intensity of red; and
determine the traffic signal to be lit in green in a case in which the intensity of green exceeds a threshold, determining the traffic signal to be lit in yellow in a case in which the intensity of yellow exceeds the threshold, and determining the traffic signal to be lit in red in a case in which the intensity of red exceeds the threshold.

13. The imaging apparatus according to any one of claims 1 to 12,
wherein the at least one processor executes the stored instructions further causing the imaging apparatus to:
recognize the object as a road sign with an arrow;
select an arrow region in the road sign;
select processing for determining a color of the arrow region based on intensity of blue; and
determine that the road sign is a road sign to indicate that vehicles are permitted to turn left in a case in which the intensity of blue exceeds a threshold, and determine that the road sign is a road sign to indicate one-way traffic for vehicles in a case in which the intensity of blue falls below the threshold.

14. The imaging apparatus according to any one of claims 1 to 13,
wherein the at least one processor executes the stored instructions further causing the imaging apparatus to:
recognize the object as a road sign with a circle having a diagonal line inside;
select an inner region of the circle in the road sign;
select processing for determining a color of the inner region of the circle based on intensity of blue; and
determine that the road sign is a road sign to indicate no parking in a case in which the intensity of blue exceeds a threshold, and determine that the road sign is a road sign to indicate no entry for vehicles in a case in which the intensity of blue falls below the threshold.

15. The imaging apparatus according to any one of claims 1 to 14,
wherein the at least one processor executes the stored instructions further causing the imaging apparatus to: select a color that is a target of color determination performed by the color determination unit based on an object detected by the recognition processing unit.

16. A processing method of an imaging apparatus (600) comprising a first imaging element (100) having a photoelectric conversion unit (102) capable of receiving invisible light, and a second imaging element (100) having a photoelectric conversion unit (102) capable of receiving visible light, the method comprising:
a performing step of performing object recognition processing using a first image generated by the first imaging element (100);
a region selection step of selecting a region in which color determination processing is to be performed based on an object detected in the object recognition processing;
a processing selection step of selecting color determination processing to be performed based on the object detected in the object recognition processing; and
a execution step of executing the selected color determination processing on the selected region using a second image generated by the second imaging element (100).

17. A non-transitory recording medium storing a control program of an imaging apparatus (600) causing a computer to perform each step of a method of controlling the imaging apparatus, the method comprising:
a performing step of performing object recognition processing using a first image generated by a first imaging element (100);
a region selection step of selecting a region in which color determination processing is to be performed based on an object detected by the object recognition processing;
a processing selection step of selecting color determination processing to be performed based on the object detected by the object recognition processing; and
a execution step of executing the selected color determination processing on the selected region using a second image generated by the second imaging element (100).
